# EUROPEAN PATENT APPLICATION

(11) **EP 2 738 843 A1**
(43) Date of publication of application: **04.06.2014**
(21) Application number: 12820524.2
(22) Date of filing: 26.07.2012
(51) Int. Cl.: H01M 4/48

(54) **NEGATIVE ELECTRODE MATERIAL FOR LITHIUM ION BATTERIES CONTAINING SURFACE-FLUORINATED B-TYPE TITANIUM OXIDE POWDER, METHOD FOR PRODUCING SAME, AND LITHIUM ION BATTERY USING SAME**

(30) Priority: 29.07.2011 JP 2011167046
(71) Applicant: The Doshisha, Kyoto-shi, Kyoto 602-8580 (JP); Toyo Tanso Co., Ltd., Osaka-shi, Osaka 555-0011 (JP)
(72) Inventor: INABA, Minoru, Kyoto 610-0394 (JP); TASAKA, Akimasa, Kyoto 610-0394 (JP); SAITO, Morihiro, Kyoto 610-0394 (JP); TAKAGI, Mikihiro, Kyoto 610-0394 (JP); TAKEBAYASHI, Hitoshi, Osaka 555-0011 (JP); SYODAI, Yoshio, Osaka 555-0011 (JP)
(74) Representative: TBK
(86) International application number: PCT/JP2012/068921
(87) International publication number: WO 2013/018638

(57) **Abstract**

A problem to be solved is to enhance the charge and discharge characteristics and rate characteristics of a B-type titanium oxide (TiO₂ (B)) powder by a simple treatment and to provide a B-type titanium oxide powder that can be suitably used as a negative electrode material for a lithium ion battery. A B-type titanium oxide powder is allowed to undergo a reaction under a fluorine-containing gas atmosphere at 0°C to 200°C for 1 minute to 10 days to obtain a surface-fluorinated B-type titanium oxide powder. It is preferred that the fluorination treatment is performed at 0.01 atm to 2 atm. It is preferred that a gas containing a fluorine compound selected from a fluorine (F₂) gas, a nitrogen trifluoride (NF₃) gas, a perfluorotrimethylamine (N(CF₃)₃) gas, a chlorine trifluoride (ClF₃) gas and the like is used as the fluorine-containing gas.

## Description

### TECHNICAL FIELD

The present invention relates to a titanium oxide-based negative electrode material that can be used as a negative electrode for a lithium ion battery. More particularly, it relates to a B-type titanium oxide (TiO₂ (B)) negative electrode material having a high capacity, a method for producing the same, and a lithium ion battery using the same.

### BACKGROUND ART

In recent years, from the viewpoints of energy and environmental problems, enlargement of a lithium ion battery is expected to allow the lithium ion battery to be a power source for an electric vehicle or a large secondary battery for power load leveling. However, it is thought that remarkable improvement in cost, safety and life is required in order to put a lithium ion battery into practical use as a large secondary battery.

In order to attain highly enhanced output, reduced cost, high safety and prolonged life of a lithium ion battery, using a high electrical potential negative electrode in which a charge and discharge reaction proceeds at an electrical potential of 1.0 V or more is one of the solutions. As an example of such a high electrical potential negative electrode, the development of a lithium-titanium composite oxide Li₄Ti₅O₁₂ having a spinel structure has proceeded.

While Li₄Ti₅O₁₂ has a flat discharge potential at about 1.55 V (vs. Li/Li⁺) and exhibits extremely good cycle characteristics, it is unattractive from the viewpoint of energy density since the theoretical capacity is low (175 mAh/g, 607 mAh/cm³). There has been published a report in which Li₄Ti₅O₁₂ is subjected to a surface fluorination treatment (Non-Patent Document 1). This report discloses that by subjecting Li₄Ti₅O₁₂ pretreated at 120°C to a fluorination treatment for 2 minutes under heating (70°C, 100°C) at elevated pressure (3 atm), charge and discharge characteristics at high current densities are enhanced. However, the conditions in which a good effect is exerted by a fluorination treatment are limited, for example, the effect cannot be obtained by the fluorination treatment at 25°C, and enhancement in charge characteristics is attained only in cases of high current densities (300 mA/g, 600 mA/g).

On the other hand, the present inventors focused their attention on B-type titanium oxide [TiO₂ (B)] which is a type of TiO₂ as a negative electrode material, and have conducted research up to the present time. Although B-type titanium oxide is a metastable phase, the theoretical capacity per weight (335 mAh/g) is comparable to that of graphite, and the theoretical capacity per volume (1246 mAh/cm³) exceeds that of graphite. Moreover, B-type titanium oxide is expected as a high capacity high potential negative electrode material since it has excellent cycle characteristics. The present inventors have already been successful in obtaining a B-type titanium oxide powder having a capacity expressed as an average discharge voltage of 1.6 V and a discharge capacity of 200 to 250 mAh/g and having good cycle characteristics and rate characteristics by subjecting K₂Ti₄O₉ as a precursor obtained by a solid phase method to ion exchanging and dehydrating (Non-Patent Document 2).

However, in order to allow the charge and discharge capacity of a B-type titanium oxide powder obtained in the actual production to approach to the theoretical capacity and effectively use the B-type titanium oxide powder as a negative electrode material, it is expected that further enhancement in charge and discharge characteristics and rate characteristics is attained using a convenient method.

### PRIOR ART DOCUMENTS

### NON-PATENT DOCUMENT

Non-Patent Document 1: T. Nakajima et al. /Journal of Fluorine Chemistry 130 (2009) 810-815
Non-Patent Document 2: M. Inaba et al. /Journal of Power Sources 189 (2009) 580-584

### SUMMARY OF THE INVENTION

### PROBLEMS TO BE SOLVED BY THE INVENTION

Thus, in the present invention, a problem to be solved is to enhance the charge and discharge characteristics and rate characteristics of a B-type titanium oxide powder by a simple treatment and to provide a B-type titanium oxide powder that can be suitably used as a negative electrode material for a lithium ion battery.

### MEANS FOR SOLVING THE PROBLEMS

While the present inventors have repeatedly conducted studies in view of solving the above problems, they have found that by performing a fluorination treatment against a B-type titanium oxide powder, a B-type titanium oxide powder having a high charge and discharge capacity and exhibiting excellent rate characteristics can be obtained, and have completed the present invention.

That is, the present invention is directed to a negative electrode material for a lithium ion battery and the negative electrode material is characterized as including a surface-fluorinated B-type titanium oxide powder. It is preferred that the BET specific surface area of the B-type titanium oxide powder the surface of which is fluorinated by a fluorination treatment is 1 m²/g to 20 m²/g. Moreover, the present invention is directed to a method for producing a surface-fluorinated B-type titanium oxide powder which is a negative electrode material of a lithium ion battery and the method is characterized as including the step of performing a fluorination treatment by allowing a B-type titanium oxide powder to undergo a reaction under a fluorine-containing gas atmosphere at usually 0 to 200°C, preferably 20 to 150°C, for 1 minute to 10 days, preferably 10 minutes to a few hours (for example, 1 hour or 2 hours).

According to the description of the previously stated Non-Patent Document 1, with regard to Li₄Ti₅O₁₂ subjected to fluorination for 2 minutes at 70°C or 100°C, enhancement in charge characteristics is observed, and a material obtained by a fluorination treatment at 25°C shows charge characteristics equivalent to or less than those of an untreated material.

In contrast, in the present invention, a fluorination treatment at a relatively low temperature range including ordinary temperature is possible, and the present invention is characterized as producing a B-type titanium oxide powder in which the degree of surface fluorination is moderately controlled by a widely ranging adjustment for the treating time or treating temperature. With regard to the treatment, since the treatment can be performed at a relatively low temperature range, in particular, in the case of a treatment at ordinary temperature, it is unnecessary to detect and control the temperature in a reaction field and it is possible to diminish the cost of the reaction apparatus and the energy cost required for the treatment.

With regard to a B-type titanium oxide powder subjected to the fluorination treatment, at least the surface thereof is fluorinated, and the shape of the powder is kept almost unchanged before and after the treatment except that the surface is slightly smoothed. Moreover, with regard to a fluorinated B-type titanium oxide powder subjected to the fluorination treatment, the charge and discharge capacity is significantly enhanced compared to an untreated material, and furthermore, the charge and discharge rate characteristics are enhanced at any current densities and good rate characteristics are attained.

It is preferred that the fluorination treatment is performed in the range of 0.01 atm to 2 atm. In the case where the treatment is performed at ordinary pressure, since providing the treatment apparatus with a sealing mechanism and allowing the treatment apparatus to have a pressure-resistant structure are unnecessary, it is advantageous in the point of apparatus cost. In the case of being performed at a pressure higher than ordinary pressure, there is an advantage that the treating time can be reduced compared to the treatment at ordinary pressure.

Furthermore, it has been confirmed that the lithium ion battery having, as a negative electrode material, a material prepared by utilizing a B-type titanium oxide powder bearing fluorine on its surface obtained by the method according to the present invention is capable of attaining an excellent charge and discharge capacity per weight (mAh/g).

### EFFECT OF THE INVENTION

Since the surface-fluorinated B-type titanium oxide powder of the present invention has a high discharge capacity per weight and is a B-type titanium oxide powder allowing the charge capacity to be stably enhanced at a wide variety of charging speeds, the powder is very useful as a high electrical potential negative electrode material for a lithium ion battery.

### BRIEF DESCRIPTION OF THE DRAWINGS

Fig. 1 shows the results obtained by subjecting B-type titanium oxide powders of Example of the present invention and Comparative Example to a powder X-ray diffraction (XRD) measurement.
Fig. 2 shows the results obtained by subjecting B-type titanium oxide powders of Example of the present invention and Comparative Example to a surface shape observation by means of a field emission type scanning electron microscope (FE-SEM). Figs. 2 (a) and 2(b) show the observation results at 5,000 magnifications and 30,000 magnifications, respectively.
Fig. 3 shows the result obtained by subjecting a B-type titanium oxide powder of Example of the present invention to an EDS measurement.
Fig. 4 shows the results obtained by subjecting B-type titanium oxide powders of Example of the present invention and Comparative Example to an XPS measurement.
Fig. 5 shows a schematic view of a bipolar coin type cell with which the performance evaluation of lithium secondary batteries using B-type titanium oxide powders of Example of the present invention and Comparative Example was performed.
Fig. 6 shows the charge and discharge curves of lithium secondary batteries using B-type titanium oxide powders of Example of the present invention and Comparative Example.
Fig. 7 shows the charge and discharge rate characteristics of lithium secondary batteries using B-type titanium oxide powders of Example of the present invention and Comparative Example.

### MODE FOR CARRYING OUT THE INVENTION

Hereinafter, the surface-fluorinated B-type titanium oxide powder and the method for producing the same according to the present invention will be described in more detail.

### <B-type titanium oxide powder>

The B-type titanium oxide powder contained in the negative electrode material for a lithium ion battery according to the present invention may be produced just before a fluorination treatment, and a B-type titanium oxide powder previously produced and preserved may be subjected to a fluorination treatment, as necessary. The B-type titanium oxide powder to be provided for a fluorination treatment can be prepared by a known production method, and although the production method is not particularly limited, for example, the powder is produced by the following method.

### Step 1: Calcining step

In the calcining step, a known titanium oxide raw material such as rutile type and/or anatase type titanium oxides and an alkali metal salt selected from the group consisting of a carbonate, a nitrate and a hydroxide of an alkali metal (sodium, potassium, rubidium or cesium) are mixed and calcined to obtain an alkali titanate (a precursor). As an alkali metal salt, a carbonate of sodium (Na₂CO₃), a carbonate of potassium (K₂CO₃) or a carbonate of cesium (Cs₂CO₃) is especially preferred. Although the particle diameter of the titanium oxide raw material is not particularly limited, rutile type and/or anatase type titanium oxides with a particle diameter of about 30 nm to 10 µm can be used.

The mixing proportion of the titanium oxide raw material and the alkali metal salt is, for example, 2 to 6 : 1 in the case where the alkali metal salt is M₂CO₃ (M represents an alkali metal) in terms of the mole ratio (more preferably, 3±0.2 : 1 in the case of a sodium salt, 4±0.2 : 1 in the case of a potassium salt, and 5±0.2 : 1 in the case of a cesium salt). The mixed sample mixed in such a proportion can be calcined at 850°C to 1100°C, preferably 900 to 1000°C, to obtain an alkali titanate. Calcining is performed in the air or in an inert gas atmosphere such as nitrogen, and the calcining time can be set to about 30 minutes to 100 hours, preferably about 2 hours to 30 hours.

In the case where Na₂CO₃ is used as the alkali metal salt in the present step, a precursor obtained after calcining is constituted of Na₂Ti₃O₇, in the case where K₂CO₃ is used as the alkali metal salt, a precursor obtained after calcining is constituted of K₂Ti₄O₉, and in the case where Cs₂CO₃ is used as the alkali metal salt, a precursor obtained after calcining is constituted of Cs₂Ti₅O₁₁.

### Step 2: Ion exchanging step

In the ion exchanging step, alkali metal ions in the alkali titanate (the precursor) obtained in Step 1 are ion-exchanged with hydrogen ions to prepare a titanic acid.

Ion exchanging can be performed by allowing a precursor powder to be immersed in 0.01 to 5 mol/L hydrochloric acid (HCl) for 1 to 300 hours with stirring. Sulfuric acid, nitric acid, perchloric acid or the like may be used as an alternative to HCl. Although ion exchanging may be performed at room temperature, it can be performed under the heating condition at about 30 to 60°C. In the case of being performed under the heating condition, it is possible to shorten the immersion time. After the ion exchanging, it is preferred that the resulting titanic acid powder is filtered, washed and then dried to be used in the next step.

### Step 3: Dehydrating step

In the dehydrating step, the titanic acid powder obtained in the ion exchanging step is dehydrated to obtain a B-type titanium oxide powder.

Dehydrating can be performed by subjecting a titanic acid powder to a heat treatment for 10 minutes to 10 hours at about 350 to 600°C. A more preferred heat treatment condition is a condition for 30 minutes to 2 hours at about 400 to 550°C.

The B-type titanium oxide powder obtained by the Steps 1 to 3 is basically obtained as an acicular crystal. The shape of the powder is not particularly restricted, and for example, the powder may be a B-type titanium oxide powder with a particulate shape, a mixture of acicular crystals and particles, or a powder with an unspecified shape allowing primary particles with a small particle diameter to be aggregated and to form secondary particles. Furthermore, as the B-type titanium oxide, a metal-doped B-type titanium oxide powder allowing a part of titanium to be substituted with another metal such as niobium (Nb), vanadium (V), chromium (Cr) or another element, or a part of oxygen to be substituted with another element such as nitrogen (N) or sulfur (S) may be used. In order to suitably obtain an effect of a fluorination treatment, it is preferred that the BET specific surface area of the B-type titanium oxide powder is 1 m²/g to 20 m²/g. When the specific surface area exceeds 20m²/g, there occurs a problem that the effective capacity is lowered since the bulk density of an electrode active material is lowered and the electrode density is reduced. When the specific surface area is less than 1 m²/g, there is a problem that the electrode characteristics such as rapid charging performance and rapid discharging performance as the reverse reaction thereof are lowered since the sufficient diffusion and occlusion of lithium ions into the inside of an active material take a long time.

### <Fluorination treatment>

With regard to the fluorination treatment in the present invention, a B-type titanium oxide powder is exposed to a fluorine-containing gas to perform a fluorination treatment. Exposure to a fluorine-containing gas can be performed by a known method. For example, the exposure may be performed by placing a B-type titanium oxide powder in an annular furnace and circulating a fluorine-containing gas through the furnace or may be hermetically performed by filling the furnace with a fluorine-containing gas.

The fluorination treatment is performed at usually 0°C to 200°C, preferably 20 to 150°C. When the temperature is less than 0°C, there is a problem that sufficient fluorination is not performed. When the temperature exceeds 200°C, there is a problem that the titanium oxide powder is converted to a gas referred to as TiF4 by the fluorination, gradually gasified from its surface, and dissipated. The treating time lies between 1 minute and 10 days, preferably between 1 minute and a few hours (for example, 1 hour or 2 hours). When the treating time is less than 1 minute, sufficient fluorination is not performed, and when the treating time exceeds 10 days, there is a problem that a function as an active material is impaired since the crystal structure of titanium oxide is changed.

The treating temperature and the treating time are set according to the shape of the B-type titanium oxide powder to be used, the amount of powder treated, the flow rate of the fluorine-containing gas and the like, and a preliminary experiment can be performed as necessary to set a suitable treatment condition. In general, there is a tendency that the higher the treating temperature is, the more shortened the treating time is.

As the fluorine-containing gas used for the fluorination treatment, a nitrogen trifluoride (NF₃) gas, a perfluorotrimethylamine (N(CF₃)₃) gas, a chlorine trifluoride (ClF₃) gas and the like, as well as a fluorine (F₂) gas, can be used. In the fluorination treatment, these gases may be used alone and may be mixed and diluted with inert gas (for example, nitrogen gas, argon gas) to be used. Although it is suitable that the concentration of a fluorine-containing compound in the gas used for the fluorination treatment is 100%, a gas which is diluted with a nitrogen gas, an argon gas or the like and containing a fluorine-containing compound of 0.01% by volume or more, preferably 0.1% by volume or more and more preferably 1% by volume or more can also be used. When the concentration of the fluorine-containing compound is less than 0.01% by volume, the fluorination is not performed efficiently since the treatment efficiency is low.

Hereinafter, a production method of a surface-fluorinated B-type titanium oxide powder according to the present invention, and the case of preparing a negative electrode for a lithium secondary battery using the resulting fluorinated B-type titanium oxide powder will be described with reference to Examples, but the present invention is not limited to these Examples.

### EXAMPLES

### [Example 1]

### Production of fluorinated B-type titanium oxide powder

As starting materials, TiO₂ anatase (available from Sigma-Aldrich Japan K.K., purity of 99% or more) and K₂CO₃ (available from Wako Pure Chemical Industries, Ltd., purity of 99.8%) were used. First, TiO₂ anatase and K₂CO₃ were weighed so as to allow the mole ratio to be 4 : 1, and mixing was performed so that the raw materials as a sample were uniformly mixed for 1 hour at 400 rpm using a planetary ball mill. Subsequently, the sample was placed in an alumina crucible, and calcination was performed in two batches in the air at 1000°C for 24 hours. Each of the resulting samples was immersed in 1 M HCl, and ion exchanging was performed for 72 hours at ordinary temperature. After ion exchanging, the sample was washed and filtered, and drying was performed for about 24 hours in a vacuum desiccator. After drying, dehydrating was performed by subjecting the sample to a heat treatment for 30 minutes at 500°C to synthesize B-type titanium oxide. Afterward, the synthesized B-type titanium oxide was transferred to a Ni-made tray and was placed in a 3-L annular furnace. After the inside pressure of the annular furnace was reduced to 0.001 atm, the titanium oxide was exposed to a 100% fluorine gas for 1 hour at ordinary temperature and a treatment pressure of 1 atm to obtain a fluorinated B-type titanium oxide powder.

### Production of test electrode

The resulting fluorinated B-type titanium oxide powder, carbon (available from Lion Corporation, KETJENBLACK EC600JD) as a conductive assistant and polyvinylidene fluoride (PVdF) (available from KUREHA CORPORATION, KF Polymer) as a binding agent were weighed and mixed at a weight ratio of 8 : 1 : 1. A planetary ball mill was used for mixing, and mixing was performed for 40 minutes at 400 rpm. The mixed material was applied onto a copper plate using a doctor blade to obtain a test electrode. At the time of applying the mixed material containing the fluorinated B-type titanium oxide powder, the thickness thereof and the electrode area were set to about 50 µm and about 1.54 cm², respectively.

### [Comparative Example 1]

A B-type titanium oxide powder was obtained in the same manner as that in Example 1 except that a fluorination treatment is not performed. Moreover, a test electrode was produced in the same manner as that in Example 1 using the B-type titanium oxide powder.

### [Example 2]

### Analysis of crystal structure of powder

With regard to the B-type titanium oxide powders obtained in Example 1 and Comparative Example 1, the bulk was analyzed for the crystal structure using the powder X-ray diffraction (XRD) method. As a powder X-ray diffractometer, Rint2500 (available from Rigaku Corporation) was used. As an X-ray source, CuKα was used, and the measurement was performed under the conditions of the tube voltage of 40 kV, the tube current of 200 mA, the measurement range of 5° ≤ 2θ ≤ 60°, the light receiving slit of 0.3 mm, the divergence slit of 1°, and the scattering slit of 1°.

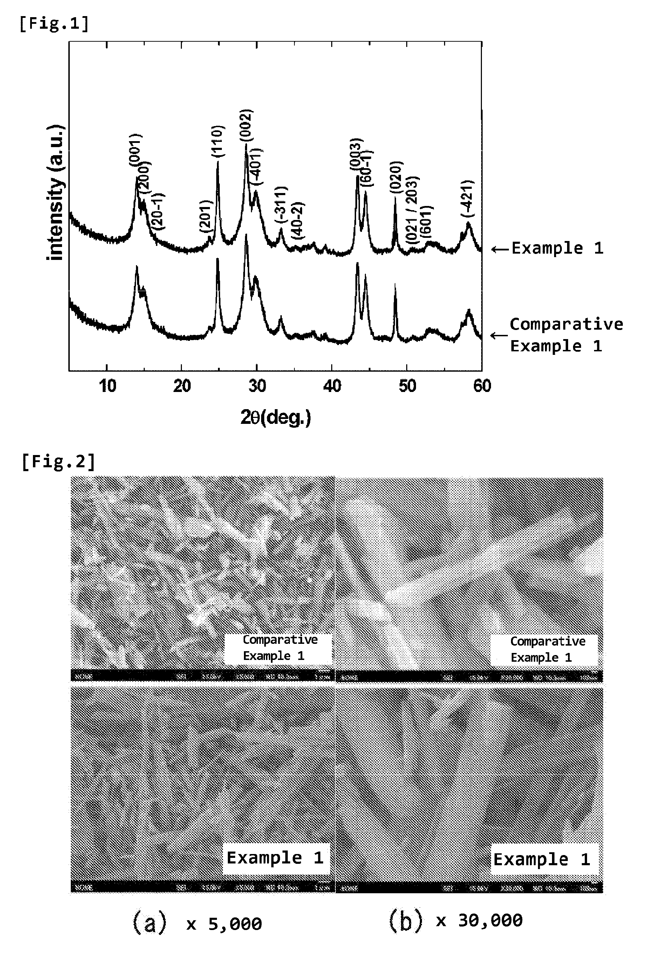

As a result of the analysis, as shown in Figure 1, with regard to Example 1 and Comparative Example 1, the change in the XRD peak shape and the shift in the peak are not observed, and it has been confirmed that the bulk structure of the B-type titanium oxide powder is not changed by the fluorination treatment.

### [Example 3]

### Surface shape observation of powder

With regard to the B-type titanium oxide powders obtained in Example 1 and Comparative Example 1, the surface shape observation was performed using a field emission type scanning electron microscope (FE-SEM). As an electron microscope, JSM7001FD available from JEOL Ltd. was used. The sample was subjected to sputtering of gold since the sample has low electron conductivity, after which the surface observation was performed at an acceleration voltage of 15 kV.

As a result of the observation, as shown in Figure 2 (a), in the observation at 5,000 magnifications, no significant change in the surface shape is observed between Example 1 and Comparative Example 1. Moreover, as shown in Figure 2(b), in the observation at 30, 000 magnifications, it has been confirmed that the surface of the sample powder of Example 1 is slightly smoothed compared to Comparative Example 1.

Moreover, with regard to the B-type titanium oxide powders obtained in Example 1 and Comparative Example 1, the specific surface area measurement was performed using a BET specific surface meter. As a measuring apparatus, the automated specific surface area and porosity analyzer TriStar 3000 available from Shimadzu Corporation was used. The sample powder was dried under vacuum for 40 minutes at 80°C, after which a helium gas was used as a filling gas, liquid nitrogen was used as an adsorbing gas, and the sample powder was evaluated.

As a result of the measurement, the BET specific surface area of Example 1 was determined to be 7.3 (m²/g), the BET specific surface area of Comparative Example 1 was determined to be 8.6 (m²/g), and it has been observed that the specific surface area of the sample powder of Example 1 is slightly reduced compared to Comparative Example 1 by the etching effect of the fluorination treatment.

### [Example 4]

### Analysis of elemental composition on powder surface

With regard to the B-type titanium oxide powder obtained in Example 1, an energy dispersive X-ray spectroscopic analysis (EDS) was performed using the electron microscope JSM7001FD available from JEOL Ltd. described in the above-mentioned Example 3 to investigate fluorine atoms which are present on the surface. Moreover, with regard to the B-type titanium oxide powders obtained in Example 1 and Comparative Example 1, an X-ray photoelectron spectroscopic analysis (XPS) was performed to confirm the presence of fluorine atoms on the sample surface, and furthermore, to research the change in chemical and electronic state of titanium and oxygen in the sample surface layer.

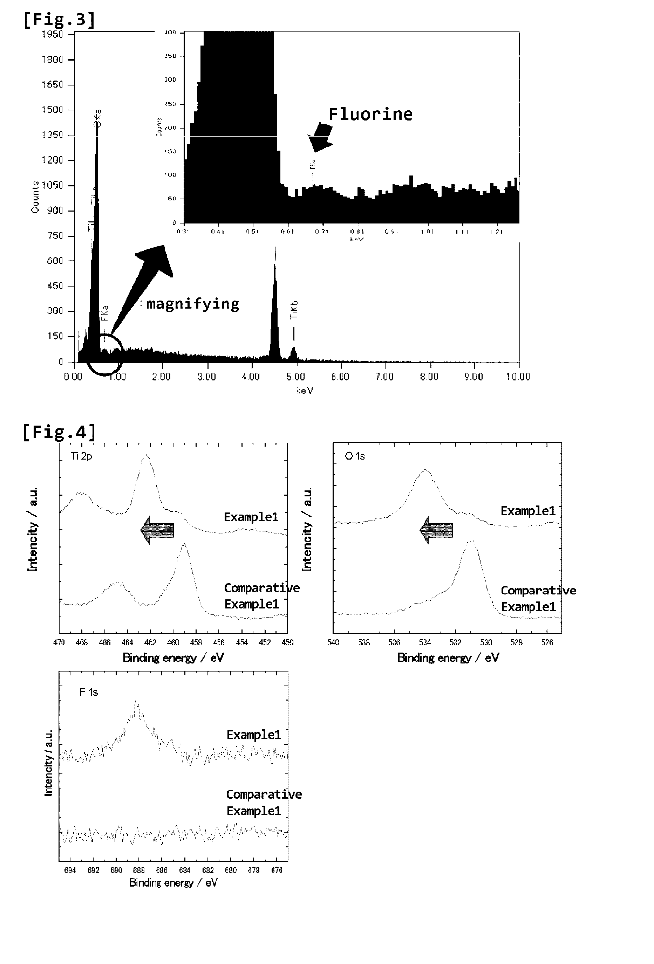

As a result of the analysis, as shown in Figure 3, a peak corresponding to the fluorine atom is detected in the EDS measurement, and it has been confirmed that fluorine atoms are present on the surface of the B-type titanium oxide powder of Example 1. Moreover, as shown in Figure 4, in the XPS measurement, the F 1s peak is confirmed in Example 1, and furthermore, with regard to Ti 2p, since the peak of the sample powder of Example 1 is shifted to the high energy side compared to Comparative Example 1, the titanium atom is subjected to electron attraction by the fluorine atom, and it is thought that the introduced fluorine atom is present while forming a chemical bond with the titanium atom. Since with regard to 0 1s, a shift to the high energy side is observed as in the case of Ti 2p, and moreover, the peak intensity is lowered, it has been suggested that some of hydroxyl groups (-OH) on the sample surface are substituted with fluorine atoms and the amount thereof is reduced.

### [Example 5]

### Performance evaluation of lithium secondary battery

The charge and discharge characteristics of the B-type titanium oxide powders obtained in Example 1 and Comparative Example 1 were evaluated by a bipolar half-cell method described below. In this connection, electrical potentials shown below are based on that of the lithium metal foil which is a counter electrode.

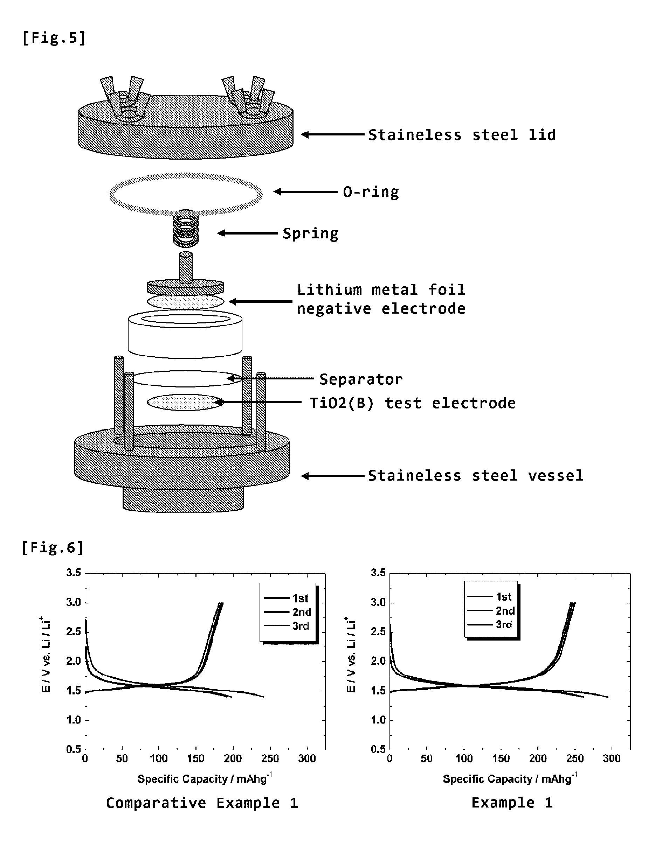

By using a bipolar coin type cell shown in Figure 5, a separator (Celgard 2325) was interposed between the fluorinated B-type titanium oxide test electrode produced in Example 1 and a lithium metal counter electrode (0.5 mm in thickness, 15 mm in diameter) to prepare a coin battery. The assembly of the cell was performed in an argon glove box equipped with a circulating device. As an electrolyte solution, one prepared by dissolving lithium hexafluorophosphate as an electrolyte at a concentration of 1 M (mol/L) in a mixed solvent of ethylene carbonate (EC) and diethyl carbonate (DMC) with a mixing ratio of 1 : 2 was used.

With regard to the test electrode of the B-type titanium oxide powder obtained in Comparative Example 1, a coin battery was prepared in the same manner as above.

In the charge and discharge cycle test, charging was started in a constant current charging method (CC mode) at the end of 24 hours after the assembly of the coin battery. The current value at the time of constant current charging was set so that the rate becomes C/6 (a current value with which the theoretical capacity is attained at the end of 6 hours) on the basis of a capacity calculated from the weight of each of working electrode powders when the theoretical capacity of B-type titanium oxide is assumed to be 335.6 mAh/g.

First, constant current charging was performed at a current value determined by the above method until the charging potential reached 1.4 V. After the elapse of a pause time of 30 minutes, discharging was performed until the cut-off potential of 3.0 V was attained. All subsequent pause times between charging and discharging were set to 30 minutes.

The evaluation of the charge and discharge rate characteristics was performed with C/6 rate for the first 3 cycles, after which the current density was sequentially changed to C/30, C/10, C/6, C/3, C, 3C and 6C every 3 cycles, while the discharge capacity was measured under the same other conditions as those described above.

The results of the charge and discharge characteristics test of Example 1 and Comparative Example 1 are shown in Figure 6 and Table 1. In both Example 1 and Comparative Example 1, the charging and discharging were observed at about 1.6 V. With regard to Example 1, significant enhancement in both charge capacity and discharge capacity is observed compared to Comparative Example 1, and the capacity has approached to the theoretical capacity of 335 mAh/g. Moreover, the charge and discharge capacity shows an almost constant value through the first to third charge and discharge tests.

**[Table 1]**

| | Charge capacity (1st)/mAhg⁻¹ | Discharge capacity (1st)/mAhg⁻¹ |
|---|---|---|
| Comparative Example 1 | 240.5 | 182.7 |
| Example 1 | 294.5 | 249.8 |

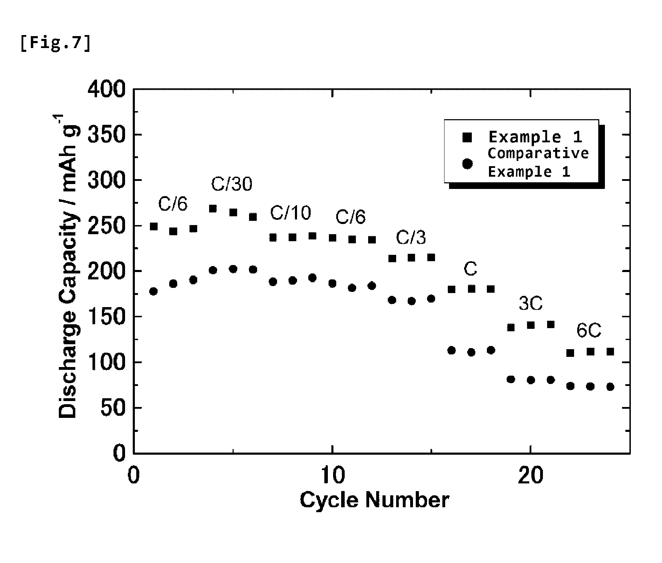

The results of rate characteristics test are shown in Figure 7. Even at any current density of 6C, 3C, 1C, C/3, C/6, C/10 and C/30, the discharge capacity of Example 1 is higher than that of Comparative Example 1. Moreover, the test was performed 3 times at each current density and an almost constant discharge capacity is shown at any current density.

From the test results stated above, with regard to the B-type titanium oxide powder subjected to a fluorination treatment by the method according to the present invention, compared to the B-type titanium oxide powder not subjected to the treatment, it is possible to allow the discharge capacity to be significantly enhanced, and moreover, the rate characteristics are also significantly enhanced and it has been experimentally demonstrated that the present invention contributes to attaining highly enhanced capacity of the B-type titanium oxide negative electrode material.

## Claims

1. A negative electrode material for a lithium ion battery, comprising a surface-fluorinated B-type titanium oxide powder.

2. The negative electrode material according to claim 1, wherein the BET specific surface area of the B-type titanium oxide powder is 1 m²/g to 20 m²/g.

3. A method for producing a negative electrode material for a lithium ion battery according to claim 1 or 2, comprising the step of performing a fluorination treatment by allowing a B-type titanium oxide powder to undergo a reaction under a fluorine-containing gas atmosphere at 0°C to 200°C for 1 minute to 10 days.

4. The method according to claim 3, wherein the fluorination treatment is performed at 0.01 atm to 2 atm.

5. The method according to claim 3 or 4, wherein the fluorine-containing gas is a gas containing a fluorine compound selected from the group consisting of a fluorine (F₂) gas, a nitrogen trifluoride (NF₃) gas, a perfluorotrimethylamine (N(CF₃)₃) gas and a chlorine trifluoride (ClF₃) gas.

6. A lithium ion battery, comprising a fluorinated B-type titanium oxide powder produced by a method according to any one of claims 3 to 5 as a negative electrode material.
